# EUROPEAN PATENT SPECIFICATION

(11) **EP 2 570 919 B1**
(45) Date of publication and mention of the grant of the patent: **19.06.2019**
(21) Application number: 12178700.6
(22) Date of filing: 31.07.2012
(51) Int. Cl.: G06F 9/48, G06F 8/654

(54) **Image forming apparatus and method of upgrading firmware**
Bilderzeugungsvorrichtung und Verfahren zur Firmware-Aktualisierung
Appareil de formation d'image et procédé de mise à niveau de micrologiciel

(30) Priority: 16.09.2011 KR 20110093462
(43) Date of publication of application: 20.03.2013
(73) Proprietor: HP Printing Korea Co., Ltd., Gyeonggi-do 16677 (KR)
(72) Inventor: Kim, Haeng-nan, Suwon-si (KR); Song, Woo-yeal, Seoul (KR)
(74) Representative: Appleyard Lees IP LLP

(56) References cited:
- WO-A1-2010/080087
- GB-A- 2 436 215
- US-A1- 2007 038 990
- US-B1- 6 467 087
- US-B1- 7 962 736

## Description

### BACKGROUND OF THE INVENTION

### 1. Field of the Invention

The present general inventive concept relates to an image forming apparatus and a method of upgrading firmware, and more particularly, to an image forming apparatus which may perform a job requested by a user even in the process of upgrading firmware and a method of upgrading firmware thereof.

### 2. Description of the Related Art

An image forming apparatus is generally an apparatus that prints print data generated from a terminal device such as a computer on a recoding paper. Examples of an image forming apparatus include a copy machine, printer, a fax machine, and a Multi-Function Peripheral (MFP) which performs the above functions in a single device.

Generally, an image forming apparatus, such as a copy machine and a printer, adopts firmware to control hardware. Such firmware is stored in a flash ROM (Read Only Memory) or an Electrically Erasable Programmable Read-Only Memory (EEPROM). The firmware is continuously upgraded to improve the performance of an image forming apparatus.

US 6,467,087 relates to a method to update printer firmware by downloading the firmware from the network. Firmware blocks are written into a non-volatile memory of the printer block by block.

However, an image forming apparatus does not perform a user's job while the apparatus' firmware is upgraded, causing inconvenience to the user. In addition, as an image forming apparatus has been able to provide various functions, the size or volume of a firmware program has also increased, taking up more time to install the firmware. All of the above factors have increased user inconvenience.

### SUMMARY OF THE INVENTION

A present general inventive concept provides an image forming apparatus which may perform a job requested by a user even in the process of upgrading firmware and a method of upgrading firmware thereof.

Additional features and utilities of the present general inventive concept will be set forth in part in the description which follows and, in part, will be obvious from the description, or may be learned by practice of the general inventive concept.

According to the present invention there is provided an apparatus and method as set forth in the appended claims. Other features of the invention will be apparent from the dependent claims, and the description which follows.

An image forming apparatus according to an exemplary embodiment includes a first storage unit to store firmware, a control unit to perform a job by loading the stored firmware, a communication interface unit to receive new firmware, and an upgrade unit to install the received new firmware in the first storage unit, and the control unit, upon receiving a new job request while the new firmware is being installed, controls the upgrade unit to suspend installation of the new firmware and perform the requested new job.

The control unit, once the requested new job is completed, may control the upgrade unit to resume installation of new firmware which has been suspended.

The upgrade unit may flash the new firmware by sector or block unit and record flashed data in the first storage unit.

The upgrade unit may check whether there is a new job request at the every sector or block unit.

The apparatus may further include a user interface unit to receive a request to perform a new job from a user and an I/O control unit to notify the control unit of a new job requested by the communication interface unit or the user interface by at least one of an interrupt and polling.

The upgrade unit may control the I/O control unit so that a new job request is notified by polling when installation of the new firmware begins and a new job request is notified by an interrupt when installation of the new firmware is finished.

The apparatus may further include a second storage to store the received new firmware.

The first storage unit may include a plurality of flash memories, and, in the upgrade unit, new firmware may be installed with respect to each of the plurality of flash memories.

The upgrade unit, if installation of the new firmware is completed and the image forming apparatus is in idle state, may re-boot the image forming apparatus, and the upgrade unit, if the re-booting time is predetermined, installation of the new firmware is completed, and the predetermined re-booting time arrives, may re-boot the image forming apparatus.

The apparatus may further include a user interface unit to display a time to install the new firmware through a user interface window.

The user interface unit, upon receiving a new job request while new firmware is being installed, may display a time to install the new firmware by reflecting a time to perform the new job.

The user interface window may include at least one area of a first area to display a time to install the new firmware, a second area to display a specific installation operation of the new firmware, a third area to receive a command to suspend installation of the new firmware, and a fourth area to receive a command to stop installation of the new firmware.

A method of upgrading firmware in an image forming apparatus to store firmware and to perform a job by loading stored firmware includes receiving new firmware, installing the received new firmware, and upon receiving a new job request while the new firmware is being installed, suspending installation of the new firmware and performing the requested new job.

The method may include, once the requested new job is completed, resuming installation of the new firmware which has been suspended.

The installing may include flashing the new firmware by sector or block unit and recording flashed data in the image forming apparatus.

The installing may include checking whether there is a new job request at the every sector or block unit.

The installing may include controlling so that a new job request is notified by polling when installation of the new firmware begins and a new job request is notified by an interrupt when installation of the new firmware is finished.

The method may further include storing the received new firmware.

The image forming apparatus may store firmware using a plurality of flash memories, and the installing may include installing new firmware with respect to each of the plurality of flash memories.

The method may further include re-booting the image forming apparatus once installation of the new firmware is completed.

The re-booting may include, if installation of the new firmware is completed and the image forming apparatus is in idle state or if the re-booting is predetermined, installation of the new firmware is completed, and the predetermined re-booting time arrives, re-booting the image forming apparatus.

The method may include displaying a time to install the new firmware with a user interface window.

The displaying may include, upon receiving a new job request while new firmware is being installed, displaying a time to install the new firmware by reflecting a time required to perform the new job.

The user interface window may include at least one area of a first area to display a time to install the new firmware, a second area to display a specific installation operation of the new firmware, a third area to receive a command to suspend installation of the new firmware, and a fourth area to receive a command to stop installation of the new firmware.

Exemplary embodiments of the present general inventive concept may also provide a method of operating a job control unit of an image forming apparatus, the method including receiving a job request with the job control unit, determining whether the received job request is a job to upgrade firmware of the image forming apparatus, and upgrading the firmware of the image forming apparatus when the received job request is the job to upgrade the firmware, and performing an operation of the image forming apparatus according to the received job request when the request is different from upgrading the firmware.

Exemplary embodiments of the present general inventive concept may also provide an image forming apparatus, including an interface to receive a job request, and to transmit the received job request to a job control unit, and the job control unit to determine whether the received job request is a job to upgrade firmware of the image forming apparatus, to upgrade the firmware when the received job request is the job to upgrade the firmware, and to perform an operation of the image forming apparatus according to the received job request when the request is different from the request to upgrade the firmware.

The interface of the image forming apparatus may include at least one of a communication interface unit and a user interface to receive the job request.

### BRIEF DESCRIPTION OF THE DRAWINGS

These and/or other features and utilities of the present general inventive concept will become apparent and more readily appreciated from the following description of the embodiments, taken in conjunction with the accompanying drawings of which:
FIG. 1 is a block diagram illustrating an image forming apparatus according to exemplary embodiments of the present general inventive concept;
FIG. 2 is a block diagram illustrating an image forming apparatus communicatively coupled to a print control terminal according to exemplary embodiments of the present general inventive concept;
FIG. 3 is a view illustrating firmware data according to exemplary embodiments of the present general inventive concept;
FIGS. 4, 5A, and 5B are views illustrating examples of a user interface window which may be displayed by a user interface unit of the image forming apparatus in FIG. 1 according to exemplary embodiments of the present general inventive concept;
FIG. 6 is a flowchart illustrating a method of upgrading firmware according to exemplary embodiments of the present general inventive concept;
FIG. 7 is a view illustrating an operation of a job control unit of the image forming apparatus in FIG. 1 according to exemplary embodiments of the present general inventive concept;
FIG. 8 is a view illustrating an operation of an upgrade unit of the image forming apparatus in FIG. 1 according to exemplary embodiments of the present general inventive concept; and
FIG. 9 is a view illustrating operations of an I/O control unit, a job control unit and an upgrade unit of the image forming apparatus in FIG. 1 while firmware is upgraded according to exemplary embodiments of the present general inventive concept.

### DETAILED DESCRIPTION OF THE PREFERRED EMBODIMENTS

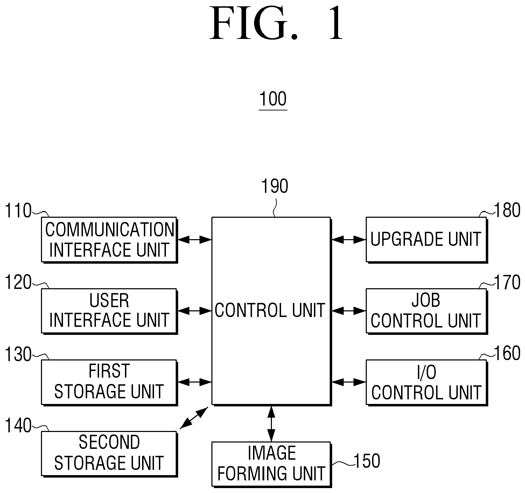

FIG. 1 is a block diagram illustrating an image forming apparatus according to exemplary embodiments of the present general inventive concept.

Referring to FIG. 1, an image forming apparatus 100 can include a communication interface unit 110, a user interface unit 120, a first storage unit 130, a second storage unit 140, an image forming unit 150, an I/O control unit 160, a job control unit 170, an upgrade unit 180, and a control unit 190.

The communication interface unit 110 can connect and/or communicatively couple the image forming apparatus 100 to a print control terminal 10. The image forming apparatus 100 and the print control terminal 10 may be connected and/or communicatively coupled via wire and/or wirelessly. For example, the image forming apparatus 100 and the print control terminal 10 may be communicatively coupled via at least one of a Local Area Network (LAN), an Internet network, and via a Universal Serial Bus (USB) port, and/or any other suitable communications link or network.

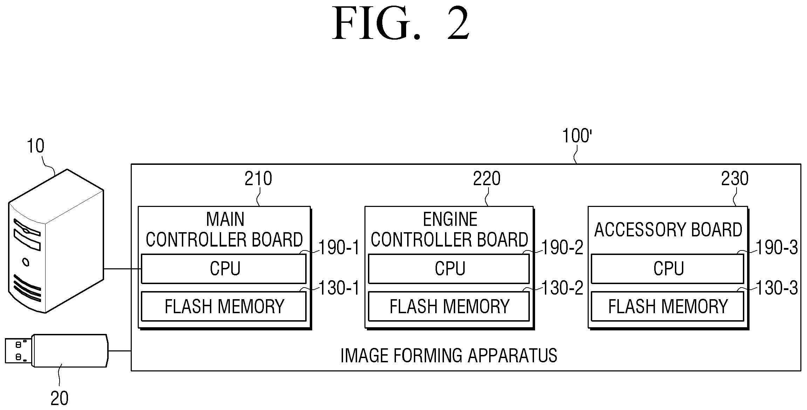

The communication interface unit 110 may receive new firmware from the print control terminal 10. Herein, the firmware refers to a micro program to control hardware. That is, the firmware may control one or more operations of the communication interface unit 110, the user interface unit 120, the first storage unit 130, the second storage unit 140, the image forming unit 150, the I/O control unit 160, the job control unit 170, the upgrade unit 180, and the control unit 190 of the image forming apparatus 100. If the image forming apparatus 100 is operated by a plurality of processors (e.g., control core CPUs 190-1, 190-2, and 190-3 of image forming apparatus 110' as illustrated in FIG. 2), the received new firmware may be a new micro program regarding a single processor and a group of micro programs regarding each of the plurality of processors. In exemplary embodiments of the present general inventive concept, new firmware can be received through the print control terminal 10, but this is only an example. The new firmware may be received via an apparatus such as a USB memory stick 21.

The communication interface unit 110 may be requested (e.g., by the control unit 190) to perform a job. Specifically, the communication interface unit 110 of the image forming apparatus 100 may receive job requests for such jobs as a print job, a scan job and a fax job. The communication interface unit 110 may transmit and/or receive data regarding each job (for example, a print job and a scan job).

The user interface unit 120 can have a plurality of functions keys through which a user sets or selects one or more functions supported by the image forming apparatus 100, and may display various information provided by the image forming apparatus 100. The user interface unit 120 may be a touch pad, where input and output are performed at the same time, or may combine an input apparatus such as a mouse and a keyboard with a display apparatus such as a CRT (cathode ray tube) monitor, a LCD (liquid crystal display) monitor, and a LED (light emitting diode) display.

The user interface unit 120 may display a user interface window to receive a command to install firmware (or a command to upgrade firmware). Accordingly, a user may input a command to install firmware through a displayed user interface window. In exemplary embodiments of the present general inventive concept, such as those illustrated in FIG. 1, a command to install firmware can be input through the user interface unit 120, but this is only an example. A command to install firmware may be input from an external apparatus such as the print control terminal 10.

The user interface unit 120 may display information regarding installation of the firmware (or upgrade of the firmware). Specifically, the user interface unit 120 may display information regarding installation of firmware such as a time to install (or to upgrade) new firmware and a specific operation to install new firmware through a user interface window. Meanwhile, if a new job is performed while the firmware is installed, the time to install new firmware may be calculated according to the time to perform the new job.

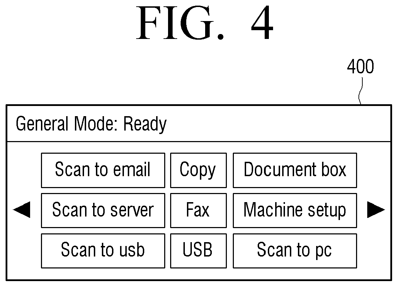

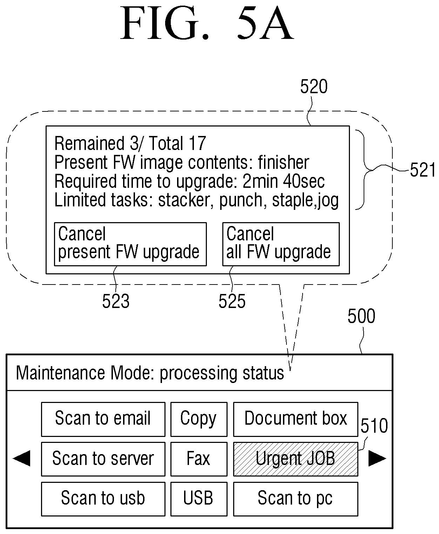

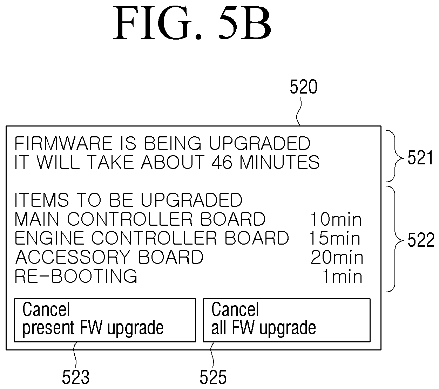

The user interface unit 120 may receive one or more commands such as a command to perform a new job, a command to suspend installing firmware, and a command to stop installing firmware. Herein, the command to perform a new job can be a request to the image forming apparatus 100 to perform a job (e.g., a print job or other job corresponding to one or more job operations of the image forming apparatus 100) while firmware is installed, the command to suspend installing firmware can be a request to stop installing firmware temporarily, and the command to stop installing firmware is a request for stopping installing firmware permanently. The user interface window which can be displayed by the user interface unit 120 will be explained later with reference to FIGS. 4, 5A, and 5B.

The first storage unit 130 can store firmware. Specifically, the first storage unit 130 stores firmware which is a micro program to perform functions of the image forming apparatus 100. Such firmware may be upgraded by the upgrade unit 180 which will be explained later. The firmware may be a processor when the image forming apparatus 100 is initially operated (e.g., a central processing unit (CPU), loaded onto a volatile memory (for example, a dynamic random access memory (DRAM)). The first storage unit 130 may be a storage medium that may be written to and have data read from a plurality of times, such as a flash ROM (Read Only Memory) or an EEPROM. The first storage unit may also be a hard disk drive (HDD), a solid state drive (SSD), and/or any suitable memory or storage to carry out the exemplary embodiments of the present general inventive concept.

The second storage unit 140 can store received new firmware. Specifically, the second storage unit 140 can store new firmware which is input through the above-described communication interface unit 110. The second storage unit 140 may store data regarding a job requested via the communication interface unit 110 or the user interface unit 120 (for example, the second storage unit 140 may store data generated from data printing and data scanning operations of the image forming apparatus 100). The second storage unit 140 may be a storage medium within an image forming apparatus (for example, a flash memory, a HDD, a SSD, and/or any other suitable storage medium) or an external storage medium (for example, a removable disk and/or device including a USB memory and/or flash memory, a storage medium connected to a host, and a web server via a network).

The image forming unit 150 can form an image. Specifically, the image forming unit 150 may form an image that corresponds to a print job (e.g., that can include print data) received through the communication interface unit 110. In exemplary embodiments of the present general inventive concept illustrated in FIG. 1, only the image forming unit 150 performing a print job is illustrated and described. However, if the image forming apparatus 100 is an MFP that may perform a scan job and/or a fax job, the image forming apparatus 100 may be configured to perform the scan job and/or fax transmitting/receiving job. That is, the image forming apparatus 100 that is an MFP may include a fax unit and/or a scanner that are communicative coupled to the control unit 190.

The I/O control unit 160 can notify the control unit 190 of a newly-requested job from the communication interface unit 110 or the user interface unit 120 by, for example, interruption and/or polling. Specifically, if the image forming apparatus 100 is operating in a general mode, the I/O control unit 160 can notify the control unit 190 of a newly-requested job by an interrupt, and if the image forming apparatus 100 is installing firmware, the I/O control unit 160 can notify the control unit 190 of a newly-requested job by a polling operation. Herein, the interruption can include notifying the control unit 190 of a new job immediately after receiving the new job, and the polling can include storing a new job and notifying the new job at a time when there is a request from the control unit 190.

The job control unit 170 can process a requested job. Specifically, the job control unit 170 can identify whether a job requested by a user is a job to upgrade firmware or a job related to a function and/or operation of the image forming apparatus 100. If a requested job is a job to upgrade firmware, the job control unit 170 can provide the job request to the upgrade unit 180 so as to upgrade firmware accordingly. Alternatively, if a requested job is not a job to upgrade firmware, the job control unit 170 can perform the requested job. For example, if a requested new job is a print job, the job control unit 170 can control the image forming unit 150 to perform the requested print job. In exemplary embodiments of the present general inventive concept, the job control unit 170 and the control unit 190 are illustrated as separate components form one another. However, they can be a single component.

The upgrade unit 180 can install new firmware that is input and/or stored in the first storage unit 130. Specifically, if a command to install new firmware is input (i.e., is received by the upgrade unit 180), the upgrade unit 180 may control the communication interface unit 110 to store the new firmware in the second storage unit 140.

The upgrade unit 180 may control the I/O control unit 160 to notify a request for a new job by a user by a polling operation when performing an upgrade operation.

The upgrade unit 180 may install new firmware in the first storage unit 130 by flashing the new firmware stored in the second storage unit 140 by sector or block unit and recording the new firmware flashed by sector or block unit in the first storage unit 130.

The upgrade unit 180 may identify whether a new job is requested by a sector or a block unit. Specifically, if a sector or a block is flashed, the upgrade unit 180 can check the I/O control unit 160 to see whether a new job is requested. If there is no new job requested, the flashed sector or block may be recorded in the first storage unit 130. However, if there is a new job requested in the I/O control unit 160, the upgrade unit 180 can stop installing new firmware (that is, without recording the flashed sector or block) and may control the job control unit 170 so as to perform the requested new job. Specifically, as existing firmware is loaded onto a CPU (specifically, a volatile memory (for example, a DRAM)) even during recording of new firmware in the first storage unit 130, the image forming apparatus 100 may perform a new job requested by a user using the loaded firmware.

In the exemplary embodiments of the present general inventive concept, it is determined whether a new job is requested is identified after flashing. However, whether a new job is requested may be identified after flashed firmware is recorded.

Once a new job is completed, the upgrade unit 180 may resume installing new firmware of which installation has been suspended. Specifically, the upgrade unit 180 may record flashed new firmware, which has not been recorded in the first storage unit 130, in the first storage unit 130.

Once installation of new firmware is completed, the upgrade unit 180 may control the I/O control unit 160 to notify a new job (e.g., provide notice of the new job) by an interrupt. The upgrade unit 180 may control the operation of the image forming apparatus so as to re-boot the image forming apparatus 100. Specifically, if installation of new firmware is completed and the image forming apparatus 100 is in an idle state (that is, in a state where no job is being performed), the upgrade unit 180 may re-boot the image forming apparatus 100. If a re-booting time is set by a user and/or is set in firmware, the upgrade unit 180 may re-boot the image forming apparatus 100 at the predetermined re-booting time after installation of new firmware is completed. By the re-booting operation, the new firmware which is newly recorded in the first storage unit 130 can be loaded onto a CPU (specifically, a volatile memory (for example, a DRAM) included as part of or communicatively coupled to the CPU) and the image forming apparatus 100 can be operated by the new firmware.

The control unit 190 can include a control core (e.g., a CPU) and a volatile memory (for example, a DRAM), and the control unit 190 can load the firmware stored in the first storage unit 130 in the volatile memory at a time of initial booting and may control each component included in the image forming apparatus using the loaded firmware.

If a job related to one or more functions and/or operations of the image forming apparatus 100 is requested, the control unit 190 may control the job control unit 170 and the image forming unit 150 to perform the requested job.

If a command to install firmware is input, the control unit 190 may control the communication interface unit 110 to receive firmware and control the upgrade unit 180 to install the received firmware.

If a new job is requested while firmware is being installed, the control unit 190 may control the upgrade unit 180 to suspend installing new firmware, and control the job control unit 170 and the image forming unit 150 to perform the requested new job. Once the requested new job is completed while firmware is being installed, the control unit 190 may control the upgrade unit 180 to resume installing the new firmware.

As described above, the image forming apparatus 100 according to exemplary embodiments of the present general inventive concept may perform a job requested by a user while firmware is being installed and thus, user convenience can be improved.

In the above description regarding FIG. 1, the job control unit 170, the upgrade unit 180 and the control unit 190 are described as separate components. However, they may be included in a single component.

In the above description, the image forming apparatus 100 can be operated by a single control core (e.g., a CPU of the control unit 190). However, the image forming apparatus 100 may have a plurality of control cores and the operation of installing firmware thereof will be explained with reference to FIG. 2.

FIG. 2 is a block diagram illustrating an image forming apparatus according to exemplary embodiments of the present general inventive concept.

Referring to FIG. 2, the image forming apparatus 100' can include a plurality of boards 210, 220, 230. As illustrated in FIG. 2, boards 210, 220 and 230 may be a main controller board 210, an engine controller board 220, and an accessory board 230.

Specifically, each of the plurality of boards 210, 220, 230 may include control cores (e.g., CPUs) 190-1, 190-2, 190-3 and memory elements 130-1, 130-2, 130-3. Herein, each of the memory elements 130-1, 130-2, 130-3 can store firmware to perform operations of each of the control cores CPU, 190-1, 190-2, 190-3.

The main control board 210 can be a board (or substrate) to control one or more operations of the image forming apparatus 100 and may perform functions and/or operations of the control unit 190 as described above.

The engine control board 220 can be a board (or substrate) to control one or more operations according to a print job and may perform operations and/or functions of the job control unit 170 or the image forming unit 150 illustrated in FIG. 1 and described above.

The accessory board 230 may perform additional functions and or operations of the image forming apparatus 100 such as a scan function, a fax function, and a function of controlling a paper feeding unit.

As described above, if the image forming apparatus 100' includes a plurality of control cores 190-1, 190-2, 190-3 and a plurality of memory elements 130-1, 130-2, 130-3, the upgrade unit 180 may upgrade firmware stored in the memory elements 130-1, 130-2, 130-3 to new firmware.

Specifically, the upgrade unit 180 may upgrade firmware of each of the plurality of memory elements 130-1, 130-2, and 130-3 in a predetermined order. For example, the upgrade unit 180 may upgrade firmware of the first memory element 130-1. If upgrade of the firmware of the first memory element 130-1 is completed, the upgrade unit 180 may upgrade firmware regarding the second memory element 130-2. If upgrade of the firmware of the second memory element 130-2 is completed, the upgrade unit 180 may upgrade firmware regarding the third memory element 130-3.

Once upgrade of firmware regarding each of the memory elements 130-1, 130-2, and 130-3 is completed, the upgrade unit 180 may re-boot the image forming apparatus 100'. In the above description, the image forming apparatus 100' can be re-booted after installation of firmware of the memory elements 130-1, 130-2, and 130-3 (e.g., all memory elements) is completed. However, the image forming apparatus 100' may be re-booted whenever upgrade of firmware regarding each of the memory elements is completed.

In the above description regarding FIG. 2, the image forming apparatus 100' has three boards. However, the image forming apparatus 100' may include two boards or more than four boards.

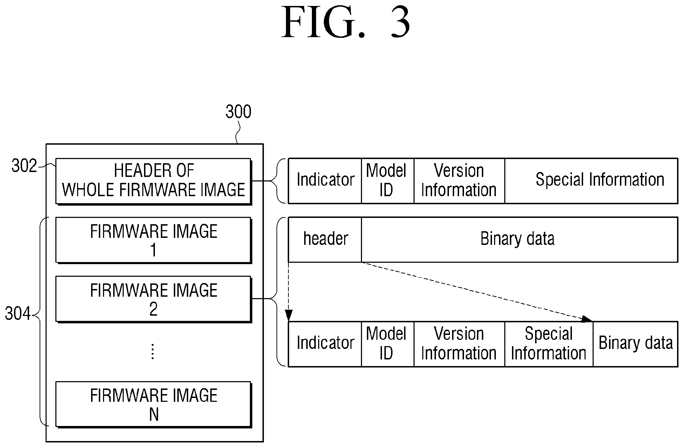

FIG. 3 is a view illustrating firmware according to exemplary embodiments of the present general inventive concept.

Referring to FIG. 3, firmware 300 includes a header of whole firmware images 302 and a plurality of firmware images 304.

The header of whole firmware images 302 can store information such as an 'indicator', a 'model ID', 'version information', 'special information', etc. Herein, 'indicator' can be an area to identify that corresponding data is a firmware image, 'model ID' can be an area where the model name of the image forming apparatus 100 to which firmware is applied is recorded, 'version information' can be an area where version information of corresponding firmware is recorded, and 'special information' can be an area where unique information regarding corresponding firmware is recorded.

Each of a plurality of firmware images 304 can store information such as 'header' and 'binary data'. Herein, 'binary data' can be firmware data to be recorded in the first storage unit 130 of the image forming apparatus 100, and 'header' is an area to record information regarding components where 'binary data' is applied (for example, the flash memory 130-1 of the main controller board 210 and the flash memory 130-2 of the engine controller board 220).

FIGS. 4, 5A, and 5B are views illustrating examples of a user interface window which may be displayed by a user interface unit in FIG. 1 according to exemplary embodiments of the present general inventive concept.

Specifically, FIG. 4 is a view illustrating an example of a user interface window displayed in a general mode, and FIGS. 5A and 5B are views illustrating examples of a user interface window displayed when firmware is installed.

Referring to FIG. 4, a user interface window 400 can display one or more functions supported by (i.e., functions that can be performed by) the image forming apparatus 100. If a user inputs a command to install firmware when the image forming apparatus 100 is operating in a general mode, installation of firmware begins and the user interface unit 120 may display a user interface window as in FIG. 5A.

Referring to FIG. 5A, a user interface window 500 can include an area 510 to receive a job request while firmware is being installed and an area 520 to display information regarding installation of firmware.

'The area 510 to receive a job request' can be an area to receive a command to suspend installing firmware and process a requested job. If a user selects 'the area 510 to receive a job request', the image forming apparatus 100 may suspend installing current firmware and perform a requested job first.

'The area 520 to display information regarding installation of firmware' includes a first area 521 to display a time required to install current firmware, a third area 523 to receive a command to suspend installing new firmware, and a fourth area 525 to receive a command to stop installing new firmware.

The first area 521 can be an area where time required to install firmware is displayed. If a user performs a job by selecting 'the area 510 to receive a job request', the first area 521 may display time required to install new firmware by reflecting time required to perform a new job. That is, the first area 521 may display a time to install new firmware that includes the time to perform the new job.

The third area 523 can be an area where a command to suspend installing new firmware temporarily is input. If a user selects the third area 523, the image forming apparatus 100 may suspend installation of current firmware until a command to resume installation of the firmware is input by the user.

The fourth area 525 can be an area where a command to stop installing new firmware is input. If a user selects the fourth area 525, the image forming apparatus 100 may stop installing current firmware.

Meanwhile, 'the area 520 to information regarding installation of firmware' may include a second area 522 where an operation to install firmware is displayed. This will be explained later with reference to FIG. 5B.

The second area 522 can display a type of board where new firmware is installed and can display information such as time required to upgrade each board.

As described above, the image forming apparatus 100 according to exemplary embodiments of the present general inventive concept may provide a user with various information regarding installation of firmware and thus, the user may easily identify how much time is expected to take to install firmware. If it is expected to take considerable amount of time to install firmware (e.g., greater than a predetermined amount of time), a user may suspend installation of current firmware and perform a required job easily.

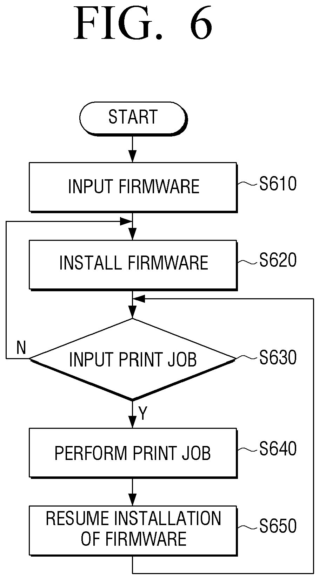

FIG. 6 is a flowchart illustrating a method of upgrading firmware according to exemplary embodiments of the present general inventive concept.

Referring to FIG. 6, new firmware can be input at operation S610. The input new firmware may be stored in a storage medium within the image forming apparatus 100 temporarily.

The input new firmware can be installed at operation S620. Specifically, a user's new job may be notified (e.g., the new firmware update request may be provided to the upgrade unit 180 of the image forming apparatus 100 of FIG. 1) by polling during upgrading. The new firmware may be flashed by a sector or a block unit, and the new firmware flashed by a sector or a block unit may be stored in the first storage unit 130. The operation of flashing and recording may be repeated to install the new firmware in the first storage unit 130 of the image forming apparatus 100.

At operation S630, it is determined whether a new job is requested for each sector or block unit of new firmware. If there is no request for a new job, the above operations of flashing and recording are repeated.

If it is determined that a new job is requested at operation S630, installation of new firmware is suspended, and the requested new job is performed at operation S640. Once the requested new job is completed, installing the new firmware is resumed at operation S650.

As described above, in the method of upgrading new firmware according to exemplary embodiments of the present general inventive concept, a job requested by a user may be performed while firmware is being installed, thereby enhancing user convenience. The method of upgrading firmware illustrated in FIG. 6 may be used not only in an image forming apparatus 100 of FIG. 1, but also in an image forming apparatus having other configurations (e.g., the image forming apparatus 100' illustrated in FIG. 2 having multiple control cores).

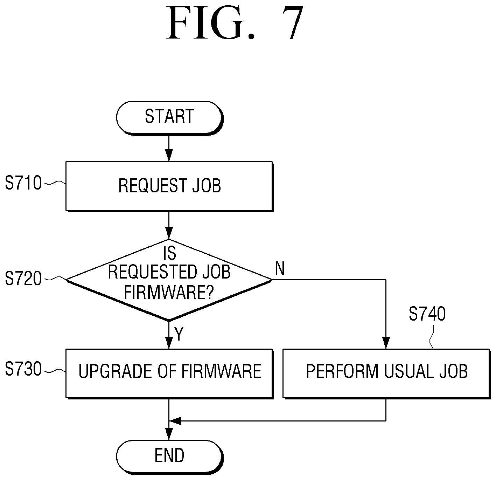

FIG. 7 is a view illustrating an operation of a job control unit 170 illustrated in FIG. 1 according to exemplary embodiments of the present general inventive concept.

Referring to FIG. 7, the job control unit 170 can receive a job request at operation S710. Specifically, a job request may be received via the communication interface unit 110 or the user interface unit 120.

At operation S720, it is determined whether the input job request is a job to upgrade firmware or not. If the input job request is a job to upgrade firmware as determined at operation S720, the upgrade unit 180 can be notified that a job to upgrade firmware is received to perform upgrading of the firmware so that the new firmware can be installed at operation S730. If it is determined at operation S720 that the input job request is a job regarding functions of the image forming apparatus 100 rather than a job to upgrade firmware, the requested job is performed at S740.

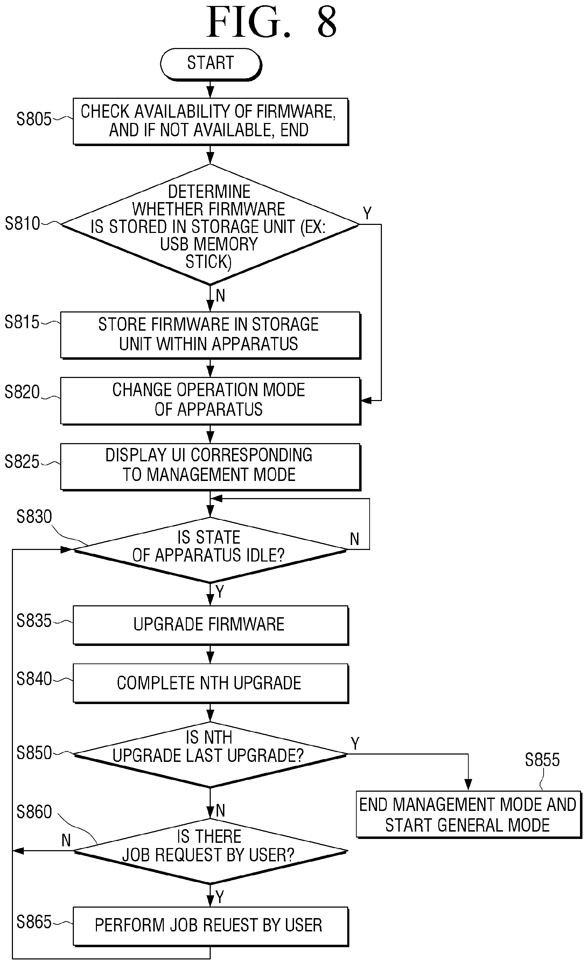

FIG. 8 is a view illustrating an operation of the upgrade unit 180 of the image forming apparatus 100 in FIG. 1 according to exemplary embodiments of the present general inventive concept.

Referring to FIG. 8, availability of received new firmware may be determined at operation S805. Specifically, a 'header of whole firmware images' (e.g., header of whole firmware image 302 as illustrated in FIG. 3) of received new firmware can be extracted. In determining the availability of the firmware at operation S805, it can be determined whether the received new firmware is firmware corresponding to the image forming apparatus 100 or not, and whether the received new firmware is the latest version or not. If it is determined that the received new firmware is available firmware, the following operations can be performed. If it is determined that the received new firmware is not available firmware at operation S805, for example, if the received new firmware is not firmware corresponding to the image forming apparatus, has a lower version than current firmware, or has the same version as current firmware, installation of the received firmware may not be performed.

At operation S810, it is determined whether received new firmware is stored in the second storage unit 140. If received firmware is not stored in the second storage unit 140 at operation S810, the received new firmware may be stored in the second storage unit 140 at operation S815.

At operation S820, an operation mode of the I/O control unit 160 is changed so that a user's new job request may be notified (e.g., may be made known to the upgrade unit 180) by polling during upgrading. The user interface unit 120 can be controlled (e.g., by the control unit 190) to display a user interface window (for example, as illustrated in FIGS. 5A and 5B) corresponding to a firmware installation mode (that is, a management mode) at operation S825.

At operation S830, it can be determined whether the image forming apparatus 100 is in an idle state, that is, whether the image forming apparatus 100 is not performing a job. If it is determined that the image forming apparatus 100 is not in idle state at operation S830, at least a predetermined period of time may be waited until the image forming apparatus 100 is in idle state. If it is determined that the image forming apparatus 100 is in idle state at operation S830, new firmware stored in the second storage unit 140 can be flashed by sector or block unit at operation S835, the new firmware flashed by sector or block unit is stored in the first storage unit 130 at operation S840 so as to perform installation of the new firmware.

If recording of one sector or one block is completed, it is determined whether the recording is the last recording at operation S850. If it is not the last recording as determined at operation S850, the I/O control unit 160 can check whether there is a new job request at operation S860. If there is no new job request at determined at operation S860, upgrading of the next sector or block may be performed.

If it is determined at operation S860 that there is a new job request, the job control unit (e.g., the job control unit 170 of the image forming apparatus 100 illustrated in FIG. 1) is notified that installation of new firmware is suspended so that the requested new job may be performed. If the requested new job is completed at operation S865, installation of the new firmware may be resumed.

When an upgrade of every sector or block is completed at operation S850, the upgrade is ended at operation S855. Specifically, a new job may be notified by an interrupt, and the image forming apparatus 100 may be re-booted. The re-booting operation may be performed immediately, or at a predetermined time (e.g., according to a firmware upgrade policy).

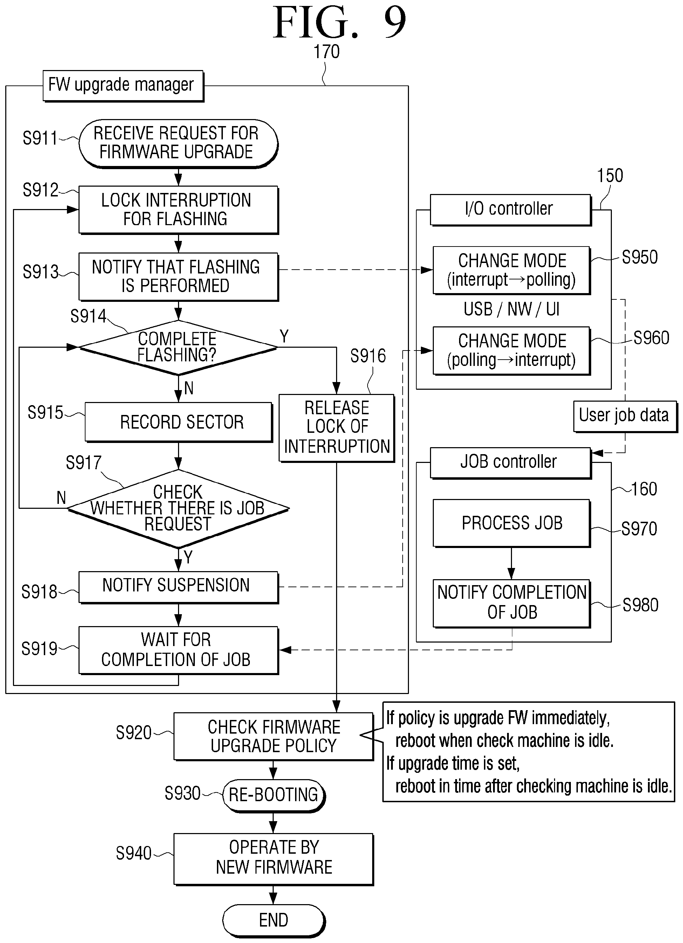

FIG. 9 is a view illustrating operations of an I/O control unit 160, a job control unit 170 and an upgrade unit 180 in FIG. 1 while firmware is upgraded according to exemplary embodiments of the present general inventive concept.

Referring to FIG. 9, if a command to upgrade firmware is received at operation S911, the upgrade unit 180 can lock interruption of a flashing process at operation S912. The upgrade unit 180 can notify the I/O control unit 160 that the flashing process will be performed at operation S913. Accordingly, the I/O control unit 160 may change the way of notification from an interruption mode to a polling method at operation S950.

The upgrade unit 180 can flash new firmware by sector or block unit and records the new firmware flashed by sector or block unit at operation S915. If the flashing of one sector or block is completed, the upgrade unit 180 can check whether there is a new job request in the I/O control unit 160 at operation S917. If there is no new job request at operation S917, the next sector or block may be upgraded.

If there is new job request, installation of firmware can be suspended at operation S918, and the job control unit 170 can be notified that installation of firmware is suspended. Accordingly, the job control unit 170 can perform the requested new job at operation S970, and once the new job is completed, the job control unit 170 can notify the upgrade unit 180 that the new job is completed at operation S980.

Once the upgrade unit 180 is notified that the new job is completed, the upgrade unit 180 can resume installation of new firmware which has been suspended. If upgrade of every sector or block is completed at operation S914, the upgrade unit 180 can control the I/O control unit 160 so that a job may be notified by means an interrupt at operation S916. Accordingly, the I/O control unit 160 may change the way of notification from a polling method to an interruption mode at operation S960.

The upgrade unit 180 can check a firmware upgrade policy to see a re-booting time at operation S920 and may control the image forming apparatus 100 to be re-booted at the re-booting time at operation S930. Accordingly, the re-booted image forming apparatus 100 can be operated by new firmware at operation S940.

## Claims

1. An image forming apparatus that prints print data, comprising:
a first storage unit (130) to store firmware;
a control unit (190) to perform a print job by loading the stored firmware;
an image forming unit (150) to form an image that corresponds to the print job; and
a communication interface unit (110) to receive new firmware;
an upgrade unit (180) to flash the received new firmware by sector or block unit and installs flashed data in the first storage unit (130),
**characterised in that** the control unit (190) checks whether there is a new print job request at the every sector or block unit, and if there is a new print job request while the new firmware is being installed, controls the upgrade unit (180) to suspend installation of the new firmware and perform the requested new print job.

2. The apparatus as claimed in claim 1, wherein the control unit, once the requested new job is completed, controls the upgrade unit to resume installation of new firmware which has been suspended.

3. The apparatus as claimed in claim 1 or claim 2, further comprising:
a user interface unit to receive a request to perform a new job from a user; and
an I/O control unit to notify the control unit of a new job requested by the communication interface unit or the user interface by at least one of an interrupt and polling.

4. The apparatus as claimed in claim 3, wherein the upgrade unit controls the I/O control unit so that a new job request is notified by polling when installation of the new firmware begins and a new job request is notified by an interrupt when installation of the new firmware is finished.

5. The apparatus as claimed in one of claim 1 to claim 4, further comprising:
a second storage unit to store the received new firmware.

6. The apparatus as claimed in one of claim 1 to claim 5, wherein the first storage unit includes a plurality of flash memories, and
wherein in the upgrade unit, new firmware is installed with respect to each of the plurality of flash memories.

7. The apparatus as claimed in one of claim 1 to claim 6, wherein the upgrade unit, if installation of the new firmware is completed and the image forming apparatus is in idle state, re-boots the image forming apparatus, and
wherein the upgrade unit, if the re-booting time is predetermined, installation of the new firmware is completed, and the predetermined re-booting time arrives, re-boots the image forming apparatus.

8. The apparatus as claimed in one of claim 1 to claim 7, further comprising:
a user interface unit to display a time to install the new firmware with a user interface window.

9. The apparatus as claimed in claim 8, wherein the user interface unit, upon receiving a new job request while new firmware is being installed, displays a time required to install the new firmware including a time to perform the new job.

10. The apparatus as claimed in claim 9, wherein the user interface window includes at least one area of a first area to display a time to install the new firmware, a second area to display a specific installation operation of the new firmware, a third area to receive a command to suspend installation of the new firmware, and a fourth area to receive a command to stop installation of the new firmware.

11. A method of upgrading firmware in an image forming apparatus to store firmware and to perform a print job by loading stored firmware, the method comprising:
receiving new firmware;
installing the received new firmware by flashing the new firmware by sector or block unit and recording flashed data in the image forming apparatus;
**characterised by**
checking if there is a new print job request at the every sector or block unit and
if there is a new print job request while the new firmware is being installed, suspending installation of the new firmware and performing the requested new print job and forming an image that corresponds to the requested new print job.

12. The method as claimed in claim 11, further comprising:
when the requested new job is completed, resuming installation of the new firmware which has been suspended.

13. The method as claimed in claim 11 or claim 12, wherein the installing comprises controlling the image forming apparatus so that a new job request is notified by polling when installation of the new firmware begins and a new job request is notified by interruption when installation of the new firmware is completed.

14. The method as claimed in one of claim 11 to claim 13, further comprising:
displaying a time to install the new firmware with a user interface window.

15. The method as claimed in claim 14, wherein the displaying comprises, upon receiving a new job request while new firmware is being installed, displaying a time to install the new firmware including a time to perform the new job.

## Patentansprüche

1. Bilderzeugungsvorrichtung, die Druckdaten druckt, Folgendes umfassend:
eine erste Speichereinheit (130) zum Speichern von Firmware;
eine Steuereinheit (190) zum Durchführen eines Druckauftrags durch Laden der gespeicherten Firmware;
eine Bilderzeugungseinheit (150) zum Ausbilden eines Bildes, das dem Druckauftrag entspricht; und
eine Kommunikationsschnittstelleneinheit (110) zum Empfangen neuer Firmware;
eine Aktualisierungseinheit (180) zum Flashen der empfangenen neuen Firmware durch eine Sektor- oder Blockeinheit und installiert geflashte Daten in der ersten Speichereinheit (130),
**dadurch gekennzeichnet, dass** die Steuereinheit (190) prüft, ob eine neue Druckauftragsanforderung in jeder Sektor- oder Blockeinheit vorliegt, und falls eine neue Druckauftragsanforderung vorliegt, während die neue Firmware installiert wird, die Aktualisierungseinheit (180) zum Unterdrücken der Installation der neuen Firmware und zum Durchführen des angeforderten neuen Druckauftrags steuert.

2. Vorrichtung nach Anspruch 1, wobei die Steuereinheit, sobald der angeforderte neue Auftrag abgeschlossen ist, die Aktualisierungseinheit steuert, die Installation neuer Firmware wieder aufzunehmen, die unterdrückt wurde.

3. Vorrichtung nach Anspruch 1 oder 2, die ferner Folgendes umfasst:
eine Benutzerschnittstelleneinheit zum Empfangen einer Anforderung zum Durchführen eines neuen Auftrags von einem Benutzer; und
eine E-/A-Steuereinheit, um der Steuereinheit einen neuen Auftrag zu melden, der durch die Kommunikationsschnittstelleneinheit oder die Benutzerschnittstelle durch Unterbrechen und/oder Abrufen angefordert wird.

4. Vorrichtung nach Anspruch 3, wobei die Aktualisierungseinheit die E-/A-Steuereinheit derart steuert, dass eine neue Auftragsanforderung durch Abrufen gemeldet wird, wenn die Installation der neuen Firmware beginnt, und eine neue Jobanforderung durch eine Unterbrechung gemeldet wird, wenn die Installation der neuen Firmware beendet ist.

5. Vorrichtung nach einem der Ansprüche 1 bis 4, ferner Folgendes umfassend: eine zweite Speichereinheit zum Speichern der empfangenen neuen Firmware.

6. Vorrichtung nach einem der Ansprüche 1 bis 5, wobei die erste Speichereinheit mehrere Flash-Speicher beinhaltet, und
wobei in der Aktualisierungseinheit neue Firmware in Bezug auf jeden der mehreren Flash-Speicher installiert wird.

7. Vorrichtung nach einem der Ansprüche 1 bis 6, wobei die Aktualisierungseinheit, falls die Installation der neuen Firmware abgeschlossen ist, und sich die Bilderzeugungsvorrichtung in einem Ruhezustand befindet, die Bilderzeugungsvorrichtung neu startet, und
wobei die Aktualisierungseinheit, falls die Neustartzeit vorbestimmt ist, die Installation der neuen Firmware abgeschlossen ist und die vorbestimmte Neustartzeit eintritt, die Bilderzeugungsvorrichtung neu startet.

8. Vorrichtung nach einem der Ansprüche 1 bis 7, ferner Folgendes umfassend: eine Benutzerschnittstelleneinheit, um eine Zeit, um die neue Firmware zu installieren, mit einem Benutzerschnittstellenfenster anzuzeigen.

9. Vorrichtung nach Anspruch 8, wobei die Benutzerschnittstelleneinheit beim Empfang einer neuen Auftragsanforderung, während neue Firmware installiert wird, eine Zeit anzeigt, die benötigt wird, um die neue Firmware zu installieren, einschließlich einer Zeit zum Durchführen des neuen Auftrags.

10. Vorrichtung nach Anspruch 9, wobei das Benutzerschnittstellenfenster Folgendes beinhaltet: wenigstens einen Bereich eines ersten Bereichs zum Anzeigen einer Zeit zum Installieren der neuen Firmware, eines zweiten Bereichs zum Anzeigen eines spezifischen Installationsvorgangs der neuen Firmware, eines dritten Bereichs zum Empfangen eines Befehls zum Unterdrücken der Installation der neuen Firmware und eines vierten Bereichs zum Empfangen eines Befehls zum Stoppen der Installation der neuen Firmware.

11. Verfahren zum Aktualisieren von Firmware in einer Bilderzeugungsvorrichtung, um Firmware zu speichern und einen Druckauftrag durchzuführen, indem die gespeicherte Firmware geladen wird, wobei das Verfahren Folgendes umfasst:
Empfangen neuer Firmware;
Installieren der empfangenen neuen Firmware durch Flashen der neuen Firmware durch eine Sektor- oder Blockeinheit und Aufzeichnen von geflashten Daten in der Bilderzeugungsvorrichtung;
**gekennzeichnet durch** Prüfen, ob an jeder Sektor- oder Blockeinheit eine neue Druckauftragsanforderung vorliegt;
falls eine neue Druckauftragsanforderung, während die neue Firmware installiert wird, vorliegt, Unterdrücken der Installation der neuen Firmware und Durchführen des angeforderten neuen Druckauftrags, und
Ausbilden eines Bildes, das dem angeforderten neuen Druckauftrag entspricht.

12. Verfahren nach Anspruch 11, ferner Folgendes umfassend:
wenn der angeforderte neue Auftrag abgeschlossen ist, Fortsetzen der Installation der neuen Firmware, die unterdrückt wurde.

13. Verfahren nach Anspruch 11 oder 12, wobei das Installieren das Steuern der Bilderzeugungsvorrichtung derart umfasst, dass eine neue Auftragsanforderung durch Abrufen gemeldet wird, wenn die Installation der neuen Firmware beginnt, und eine neue Auftragsanforderung durch Unterbrechen gemeldet wird, wenn die Installation der neuen Firmware abgeschlossen ist.

14. Verfahren nach einem der Ansprüche 11 bis 13, ferner Folgendes umfassend:
Anzeigen einer Zeit, um die neue Firmware zu installieren, mit einem Benutzerschnittstellenfenster.

15. Verfahren nach Anspruch 14, wobei das Anzeigen beim Empfangen einer neuen Auftragsanforderung, während die neue Firmware installiert wird, das Anzeigen einer Zeit, um die neue Firmware zu installieren, einschließlich einer Zeit umfasst, den neuen Auftrag durchzuführen.

## Revendications

1. Appareil de formation d'images qui imprime des données d'impression, comprenant :
une première unité de stockage (130) pour stocker un micrologiciel;
une unité de commande (190) pour exécuter un travail d'impression par le chargement du micrologiciel stocké ;
une unité de formation d'images (150) pour former une image qui correspond au travail d'impression ; et
une unité d'interface de communication (110) pour recevoir un nouveau micrologiciel;
**caractérisé en ce qu'**il comprend une unité de mise à niveau (180) pour mettre en mémoire flash le nouveau micrologiciel reçu par unité de secteur ou de bloc, et installe des données mises en mémoire flash dans la première unité de stockage (130),
dans lequel l'unité de commande (190) vérifie s'il existe une nouvelle demande de travail d'impression au niveau de chaque unité de secteur ou de bloc, et si une nouvelle demande de travail d'impression existe pendant l'installation du nouveau micrologiciel, commande à l'unité de mise à niveau (180) de suspendre l'installation du nouveau micrologiciel et d'exécuter le nouveau travail d'impression demandé.

2. Appareil selon la revendication 1, dans lequel l'unité de commande, une fois le nouveau travail demandé terminé, commande l'unité de mise à niveau pour reprendre l'installation du nouveau micrologiciel qui a été suspendue.

3. Appareil selon la revendication 1 ou la revendication 2, comprenant en outre :
une unité d'interface utilisateur pour recevoir une demande d'exécution d'un nouveau travail provenant d'un utilisateur ; et
une unité de commande d'E/S pour notifier à l'unité de commande un nouveau travail demandé par l'unité d'interface de communication ou l'interface utilisateur par au moins l'une d'une interruption ou d'une interrogation.

4. Appareil selon la revendication 3, dans lequel l'unité de mise à niveau commande l'unité de commande d'E/S de sorte qu'une nouvelle demande de travail est notifiée par interrogation lorsque l'installation du nouveau micrologiciel commence et qu'une nouvelle demande de travail est notifiée par interruption lorsque l'installation du nouveau micrologiciel est terminée.

5. Appareil selon l'une quelconque des revendications 1 à 4, comprenant en outre : une seconde unité de stockage pour stocker le nouveau micrologiciel reçu.

6. Appareil selon l'une des revendications 1 à 5, dans lequel la première unité de stockage comporte une pluralité de mémoires flash, et
dans lequel, dans l'unité de mise à niveau, un nouveau micrologiciel est installé par rapport à chacune de la pluralité de mémoires flash.

7. Appareil selon l'une des revendications 1 à 6, dans lequel l'unité de mise à niveau, si l'installation du nouveau micrologiciel est terminée et que l'appareil de formation d'images est à l'état de repos, redémarre l'appareil de formation d'images, et
dans lequel l'unité de mise à niveau, si le temps de redémarrage est prédéterminé, que l'installation du nouveau micrologiciel est terminée et que le temps de redémarrage prédéterminé arrive, redémarre l'appareil de formation d'images.

8. Appareil selon l'une quelconque des revendications 1 à 7, comprenant en outre : une unité d'interface utilisateur pour afficher un temps d'installation du nouveau micrologiciel avec une fenêtre d'interface utilisateur.

9. Appareil selon la revendication 8, dans lequel l'unité d'interface utilisateur, lors de la réception d'une nouvelle demande de travail alors que le nouveau micrologiciel est en cours d'installation, affiche un temps requis pour installer le nouveau micrologiciel, y compris un temps d'exécution du nouveau travail.

10. Appareil selon la revendication 9, dans lequel la fenêtre d'interface utilisateur comporte au moins une zone d'une première zone pour afficher un temps d'installation du nouveau micrologiciel, une deuxième zone pour afficher une opération d'installation spécifique du nouveau micrologiciel, une troisième zone pour recevoir une commande de suspension de l'installation du nouveau micrologiciel, et une quatrième zone pour recevoir une commande d'arrêt de l'installation du nouveau micrologiciel.

11. Procédé de mise à niveau d'un micrologiciel dans un appareil de formation d'images pour stocker un micrologiciel et exécuter un travail d'impression par le chargement d'un micrologiciel stocké, le procédé comprenant :
la réception d'un nouveau micrologiciel;
l'installation du nouveau micrologiciel reçu par la mise en mémoire flash du nouveau micrologiciel par unité de secteur ou de bloc et l'enregistrement des données mises en mémoire flash dans l'appareil de formation d'images ;
le fait de vérifier s'il y a une nouvelle demande de travail d'impression au niveau de chaque unité de secteur ou de bloc ;
s'il y a une nouvelle demande de travail d'impression pendant l'installation du nouveau micrologiciel, la suspension de l'installation du nouveau micrologiciel et l'exécution du nouveau travail d'impression demandé, et
la formation d'une image qui correspond au nouveau travail d'impression demandé.

12. Procédé selon la revendication 11, comprenant en outre :
lorsque le nouveau travail demandé est terminé, la reprise de l'installation du nouveau micrologiciel qui a été suspendue.

13. Procédé selon la revendication 11 ou la revendication 12, dans lequel l'installation comprend la commande de l'appareil de formation d'images de sorte qu'une nouvelle demande de travail est notifiée par interrogation lorsque l'installation du nouveau micrologiciel commence et qu'une nouvelle demande de travail est notifiée par interruption lorsque l'installation du nouveau micrologiciel est terminée.

14. Procédé selon l'une des revendications 11 à 13, comprenant en outre :
l'affichage d'un temps d'installation du nouveau micrologiciel avec une fenêtre d'interface utilisateur.

15. Procédé selon la revendication 14, dans lequel l'affichage comprend, lors de la réception d'une nouvelle demande de travail alors que le nouveau micrologiciel est en cours d'installation, l'affichage d'un temps d'installation du nouveau micrologiciel, y compris un temps d'exécution du nouveau travail.
